# EUROPEAN PATENT APPLICATION

(11) **EP 4 462 301 A1**
(43) Date of publication of application: **13.11.2024**
(21) Application number: 24152078.2
(22) Date of filing: 16.01.2024
(51) Int. Cl.: G06F 30/347, H01L 23/48, H01L 25/065, G06F 30/392, G06F 30/398, G06F 111/20, G06F 119/22

(54) **METHOD AND SYSTEM OF DESIGNING INTEGRATED CIRCUIT**

(30) Priority: 12.05.2023 KR 20230061930
(71) Applicant: Samsung Electronics Co., Ltd., Suwon-si, Gyeonggi-do 16677 (KR)
(72) Inventor: KIM, Ki-Ok, 16677 Suwon-si, Gyeonggi-do (KR); HONG, Yongjin, 16677 Suwon-si, Gyeonggi-do (KR); LIM, Mijeong, 16677 Suwon-si, Gyeonggi-do (KR)
(74) Representative: Kuhnen & Wacker Patent- und Rechtsanwaltsbüro PartG mbB

(57) **Abstract**

An example embodiment provides a design method of an integrated circuit, including: placing a through-via (112); determining a keep-out zone (114) around the through-via (112) based on a saturated current variation rate according to a distance from the through-via (112); placing standard cells; determining a cell placed within the keep-out zone (114) among the cells; and setting a timing margin based on the distance from the through-via (112) to the cell.

## Description

### BACKGROUND

An integrated circuit that processes a digital signal may be designed based on a standard cell. An integrated circuit may include standard cells, and cells corresponding to one standard cell may have the same layout. The layout of the integrated circuit may be generated by disposing cells and generating interconnections that electrically connect the cells so that the integrated circuit implements a desired function.

As demands for high performance, high speed, and/or multifunctionality of semiconductor devices increase, the degree of integration of semiconductor devices is increasing. According to the trend of high integration of semiconductor devices, research is being actively conducted to increase the degree of integration while satisfying design rules when designing a layout, particularly when disposing semiconductor devices.

### SUMMARY

The present disclosure provides a method and system of manufacturing an integrated circuit that may dispose a standard cell in a keep-out zone (KoZ).

In some implementations, using the disclosed method and system of manufacturing an integrated circuit reduces spatial overhead.

In general, innovative aspects of the subject matter described in this specification can be embodied in methods that include the actions of: placing a through-via; determining a keep-out zone around the through-via based on a saturated current variation rate according to a distance from the through-via; placing standard cells; determining a cell placed within the keep-out zone among the cells; and setting a timing margin based on the distance from the through-via to the cell.

Another general aspect can be embodied in methods that include the actions of: storing a timing margin corresponding to a distance from a through-via in a standard cell library of standard cells included in an integrated circuit; placing a through-via; determining a keep-out zone around the through-via based on a saturated current variation rate according to a distance from the through-via; placing standard cells; determining a cell placed within the keep-out zone among the cells; and setting the timing margin based on the distance from the through-via to the cell by referring to the standard cell library.

Another general aspect can be embodied in a computing system for manufacturing an integrated circuit including standard cells, including: a memory storing information including procedures; and a processor accessing the memory and executing the procedures, wherein the procedures include a cell placer that places through-via, determines a keep-out zone around the through-via based on a saturated current variation rate according to a distance from the through-via, places a standard cell, determines a cell placed within the keep-out zone among the cells, and sets a timing margin based on a distance from the through-via to the cell, and a router that generates layout data of an integrated circuit by routing the cells.

### BRIEF DESCRIPTION OF THE DRAWINGS

FIG. 1 illustrates a schematic perspective view of an example of a semiconductor package.
FIG. 2 illustrates a flowchart of an example of a design method of an integrated circuit.
FIG. 3 illustrates an example of an area in which through-vias of an integrated circuit are placed.
FIG. 4 illustrates a graph of a saturated current change rate according to a distance from a through-via for each number of the through-vias in the area of FIG. 3.
FIG. 5 illustrates an example of a logic circuit diagram of an integrated circuit.
FIG. 6 illustrates a layout in which cells of FIG. 5 are placed adjacent to a through-via structure.
FIG. 7 illustrates a table of examples of cell types and distances from through-vias of cells placed in a soft keep-out zone to through-vias.
FIG. 8 illustrates a table of an example of a timing margin according to a cell type and a distance from a through-via.
FIG. 9 illustrates an example of a code for applying a timing margin according to a design method of an integrated circuit.
FIG. 10 illustrates an example of a cell library structure for applying a timing margin according to a design method of an integrated circuit.
FIGS. 11 and 12 illustrate block diagrams of examples of design systems of an integrated circuit.
FIG. 13 illustrates a flowchart of an example of a design method of an integrated circuit.
FIG. 14 illustrates an example of a block diagram of an electronic system.

### DETAILED DESCRIPTION

The present disclosure will be described more fully hereinafter with reference to the accompanying drawings, in which examples of the disclosure are shown. As those skilled in the art would realize, the described examples may be modified in various different ways, all without departing from the scope of the present disclosure.

Accordingly, the drawings and description are to be regarded as illustrative in nature and not restrictive. Like reference numerals designate like elements throughout the specification. In the flowcharts described with reference to the drawings in this specification, the operation order may be changed, various operations may be merged, certain operations may be divided, and certain operations may not be performed.

In addition, a singular form may be intended to include a plural form as well, unless an explicit expression such as "one" or "single" is used. Terms including ordinal numbers such as first, second, and the like will be used only to describe various configurations and are not to be interpreted as limiting these configurations. These terms may be used for a purpose of distinguishing one constituent element from other configurations.

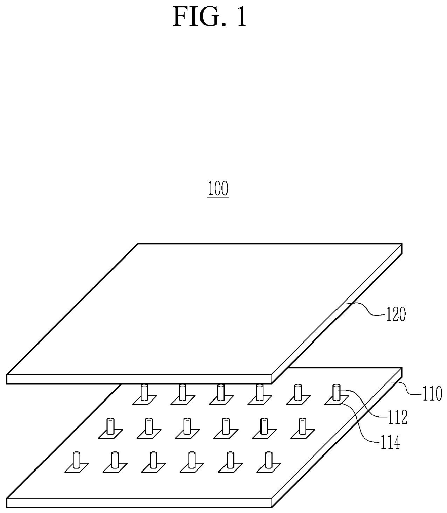

FIG. 1 illustrates a schematic perspective view of an example of a semiconductor package 100.

The semiconductor package 100 includes a first chip 110 including through-vias 112 for transmitting signals and/or power, and a second chip 120 stacked and bonded on the first chip 110. In some implementations, the first chip 110 and the second chip 120 are each a semiconductor chip or semiconductor chiplet including a semiconductor device or a semiconductor substrate.

An area 114, e.g., a keep-out zone (KoZ), in which a circuit is selectively placed to prevent a defect caused by formation of the through-vias 112, is included on the first chip 110. Setting a keep-out zone with a boundary of the keep-out zone being spaced apart from the through-vias 112 by a predetermined distance may prevent placement of circuit components in an area with a reduction in the carrier mobility of active silicon existing in the vicinity of the through-vias 112 in the first chip 110. Usually, no circuits or wires are placed within the KoZ. The boundary of the KoZ may be defined by a predefined distance around the through-vias 112. For example, the KoZ may be an area within a predefined distance from the through-vias 112.

Although circuits are not usually disposed in the KoZ to avoid damage caused by stress from through-vias, in some implementations, an integrated circuit with a high degree of integration includes a circuit that is disposed in the area 114, e.g., a KoZ. In some implementations, location of the circuit is determined based on a variation rate of a saturated current (IDsat) of a transistor.

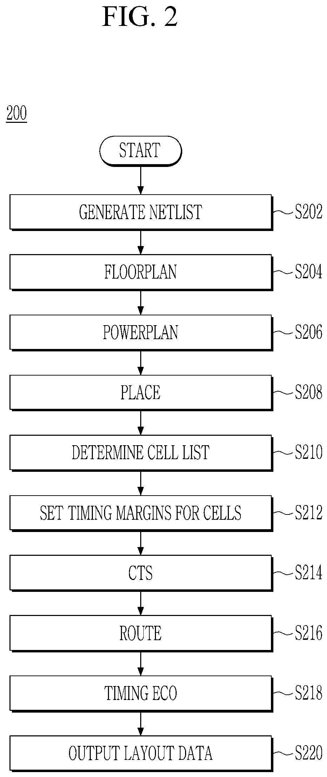

FIG. 2 illustrates a flowchart of an example of a design method of an integrated circuit.

An integrated circuit may be defined as a plurality of cells and may be specifically designed using a cell library including characteristic information of a plurality of cells. Hereinafter, a cell may be a standard cell, and a cell library may be a standard cell library.

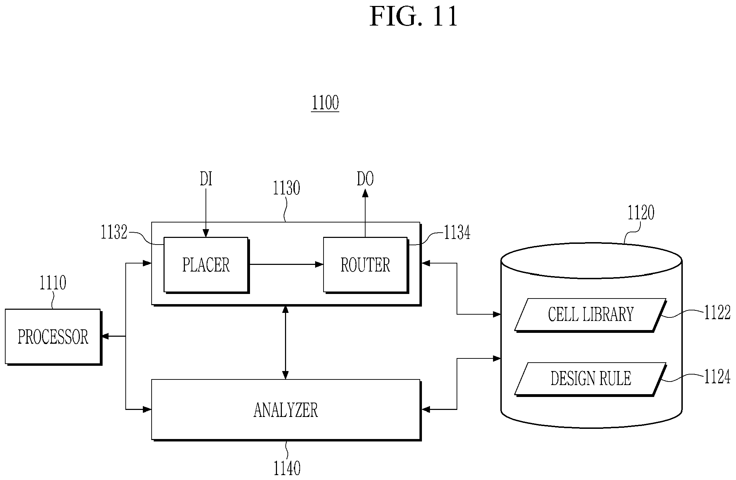

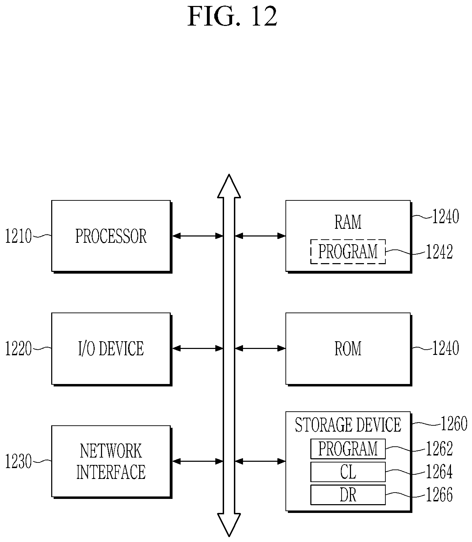

Referring to FIG. 2, a design method 200 of the integrated circuit in some implementations may be a method of designing a layout of the integrated circuit and may be performed in a tool for designing the integrated circuit. In this example, a tool for designing the integrated circuit may be a program including a plurality of instructions performed by a processor. The tools and the program performing the method will be described later with reference to FIGS. 11 and 12.

A processor generates a netlist (S202). The netlist may be generated by synthesizing an integrated circuit defined as a hardware description language (HDL) such as a Very-High-Speed Integrated Circuits (VHSIC) hardware description language (VHDL) and Verilog according to a required specification. For the synthesizing, a design compiler corresponding to an EDA program may be used.

A processor determines a floorplan (S204). Step S204 may include physically designing a logically designed schematic circuit by cutting and moving it. In step S204, it is possible to dispose a memory or function block. For example, in step S204, functional blocks to be placed adjacently are identified, and spaces for the functional blocks may be allocated in consideration of available space and required performance. For example, the disposing of the floorplan (S204) may include generating a site-row and forming a metal routing track in the generated site-row. The site-row is a frame for disposing cells stored in a cell library according to a defined design rule. The metal routing track is an imaginary line on which wires are formed later.

A processor determines a power plan (S206). Step S206 may include disposing patterns of wires connecting local power, for example, a driving voltage or ground, to placed functional blocks. For example, patterns of wires connecting power or ground may be generated so that power may be evenly supplied to the entire chip in a net form. The patterns may include power rails, and in step S206, the patterns may be generated in the form of nets through various rules.

A cell placer places a cell (S208). Step S208 is a step of disposing patterns of elements configuring a functional block and may include disposing the cell. The disposing may include determining where to dispose gates in the functional block. The disposing may include generating a disposition pattern of elements configuring the functional block.

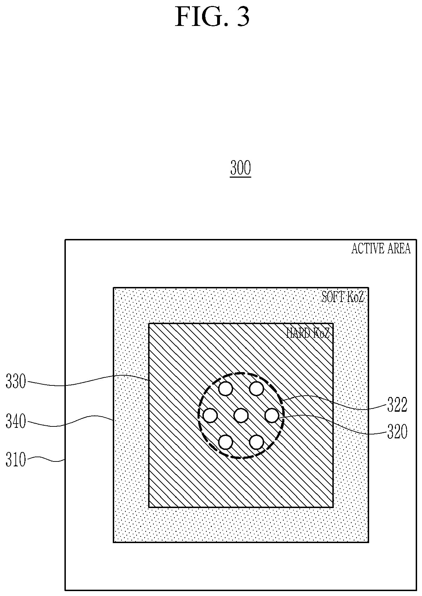

In this example, in step S204 or step S208, the area in which the through-via is disposed is determined. In some implementations, the keep-out zone (KoZ) may be determined in step S204 or step S208. For example, in step S204, both the area in which the through-via is disposed and the keep-out zone (KoZ) may be determined; in step S204, the area in which the through-via is disposed may be determined, and in step S208, the keep-out zone (KoZ) may be determined; and in step S208, both the area in which the through-via is disposed and the keep-out zone (KoZ) may be determined. The keep-out zone KoZ may include an area in which no integrated circuits are placed to prevent use of an area with defects caused by formation of the through-vias (hereinafter referred to as a 'hard keep-out zone'), and may include an area in which at least one integrated circuit is placed by applying a timing margin (hereinafter referred to as a 'soft keep-out zone'). This will be described with reference to FIG. 3.

FIG. 3 illustrates an example of an area in which through-vias of an integrated circuit are placed.

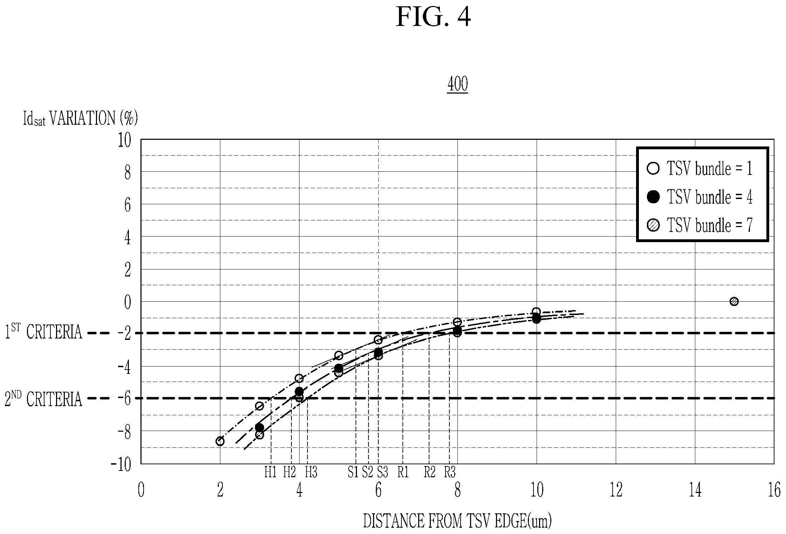

Referring to FIG. 3, in step S204 or step S208, an area in which a through-via 320 is disposed within a second chip 300 is determined. At least one through-via 320 may be disposed. In some implementations, at least one through-via 320 may configure a unit through-via structure 322. The unit through-via structure 322 may include a regularly placed plurality of through-vias 320. A boundary 330 of a hard keep-out zone (HARD KoZ) and a soft keep-out zone (SOFT KoZ) and a boundary 340 of the soft keep-out zone (SOFT KoZ) and an active area (ACTIVE AREA) may be determined by a distance from an outermost through-via 320 of the unit through-via structure 322 (for example, an edge of the outermost through-via 320). This will be described with reference to FIG. 4. In the FIG. 3, 310 may refer to a boundary of the active area.

FIG. 4 illustrates a graph 400 of a saturated current Idₛₐₜ change rate as a function of distance from a through-via for each number of the through-vias in a Through Silicon Via (TSV) bundle in the area of FIG. 3. In an example, the distance from the through-via may refer to the distance from the outermost through-via in the unit through-via structure.

Referring to FIG. 4, saturated current variation rates according to the distances from the through-vias when the number of through-vias of the unit through-via structure is 1, 4, and 7 are shown. Each curve in FIG. 4 corresponds to a different TSV bundle, e.g., having 1, 4, or 7 TSVs.

In step S204 or step S208, the keep-out zone may be determined based on the saturated current variation rate. For example, the keep-out zone for each TSV bundle may be determined based on (i) first distances R1, R2, and R3 (e.g., first distance R) from the through-via when the saturated current variation rate is a first criteria value, e.g., about -2%, (ii) second distances S1, S2, and S3 (e.g., second distance S) from the through-via when a slope between the distance from the through-via and the saturated current variation rate is the threshold value, e.g., about 1% per micron, and (iii) third distances H1, H2, and H3 (e.g., third distance H) from through-via when the saturated current variation rate is a second criteria value, e.g., about -6%. The second distances S1, S2, and S3 depend on the threshold value for the slope. For example, the second distance S may be changed by changing the threshold value. In some implementations, the threshold value for determining the second distances S1, S2, and S3 may be changed according to performance, an operating frequency conditions, and the like of the integrated circuit. For example, a first threshold value for the slope determining the second distances S1, S2, and S3 when the integrated circuit operates at a low frequency may be smaller than a second threshold value determining the second distances S1, S2, and S3 when the integrated circuit operates at a high frequency.

For the sake of brevity, the case for evaluating a single TSV bundle using first distance R, second distance S, and third distance H will be used hereinafter.

For example, when the first distance R is greater than the second distance S, and the second distance S is greater than the third distance H, the soft keep-out zone is an area between the first distance R and the second distance S from the through-via, and the hard keep-out zone is an area within the second distance S from the through-via.

As another example, when the first distance R is greater than the second distance S, and when the second distances S is less than or equal to the third distance H, an area between the first distances R and the third distance H from the through-via may be determined as a soft keep-out zone, and an area within the third distance H from the through-via may be determined as a hard keep-out zone.

As another example, when the second distance S is greater than the first distance R, and when the first distance R is greater than the third distance H, an area between the first distance R and the third distance H from the through-via is determined as a soft keep-out zone, and an area within the third distance H from the through-via is determined as a hard keep-out zone.

In step S204, when both the area in which the through-via is disposed and the keep-out zone (KoZ) are determined, in step S208, a cell having a relatively low stress (e.g., a stress lower than a predetermined stress) according to a distance from the through-via may be placed in the soft keep-out zone. The stress according to the distance from the through-via may be calculated through Simulation Program with Integrated Circuit Emphasis (SPICE) simulation. In some implementations, a cell that does not belong to a data path that is critical to timing characteristics, among a plurality of data paths between cells included in the integrated circuit, that is critical to timing characteristics between cells included in the integrated circuit, is placed in the soft keep-out zone.

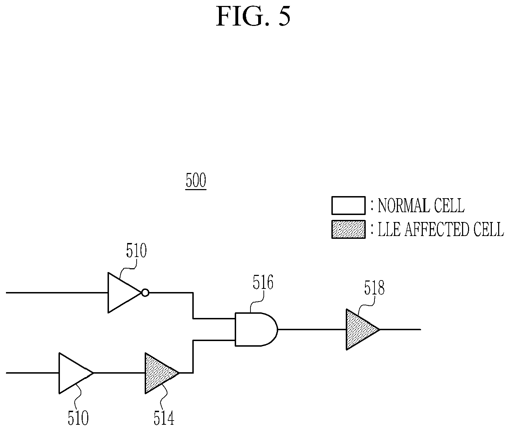

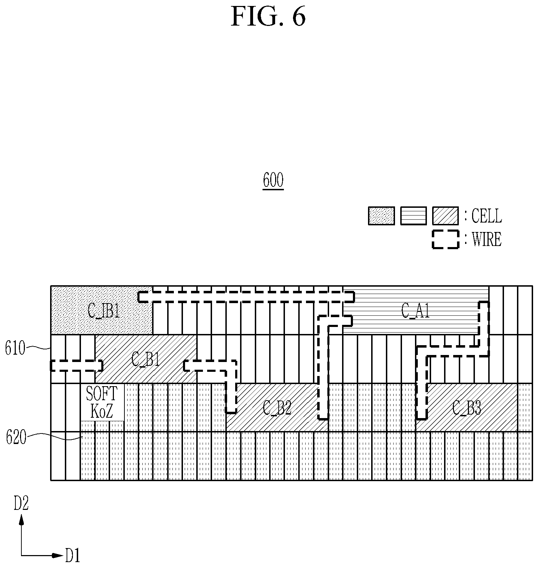

An analyzer determines a list of cells placed within the keep-out zone (S210). In step S210, among the placed cells, cells placed within the keep-out zone may be extracted, and a cell type of each of the cells and a distance from the through-via may be determined. This will be described with reference to FIGS. 5 and 6.

FIG. 5 illustrates an example of a logic circuit diagram 500 included in an integrated circuit, and FIG. 6 illustrates a layout 600 in which the cells of FIG. 5 are placed adjacent to a through-via structure.

Referring to FIG. 5, an output terminal of an inverter 510 may be connected to a first input terminal of an AND gate 516, an output terminal of a buffer 512 may be connected to an input terminal of a buffer 514, and an output terminal of the buffer 514 may be connected to a second input terminal of the AND gate 516. An output terminal of the AND gate 516 may be connected to an input terminal of a buffer 518. For example, normal cells may include the inverter 510, the buffer 512 and the AND gate 516, and LLE affected cells (e.g., cells having the relatively low stress according to the distance from the through-via or cells that does not belong to the data path, that is critical to the timing characteristics) may include the buffer 514 and the buffer 518.

Referring to FIG. 6, in step S208, cells C_IB1, C_B1, C_B2, C_A1, and C_B3 of the cells implementing the logic circuit of FIG. 5 may be placed along the first direction D1, and then in step S216, the cell placer connects the cells C_IB1, C_B1, C_B2, C_A1, and C_B3 to each other through wires (WIRE). The cells C_IB1, C_B1, C_B2, C_A1, and C_B3 may respectively correspond to the inverter 510, the buffer 512, the buffer 514, the AND gate 516, and the buffer 518 of FIG. 5.

The cells C_IB1, C_B1, C_B2, C_A1, and C_B3 may be placed in an active area 610 and a soft keep-out zone 620. For example, the cells C_IB1, C_B1, and C_A1 corresponding to the inverter 510, the buffer 512, and the AND gate 516 of FIG. 5 may be placed in the active area 610, and the cells C_B2 and C_B3 corresponding to the buffer 514 and the buffer 518 may be placed in the soft keep-out zone 620.

In step S210, among the cells C_IB1, C_B1, C_B2, C_A1, and C_B3, the cells C_B2 and C_B3 placed within the keep-out zone 620 may be extracted, and a cell type of each of the cells C_B2 and C_B3 and a distance from the through-via may be determined.

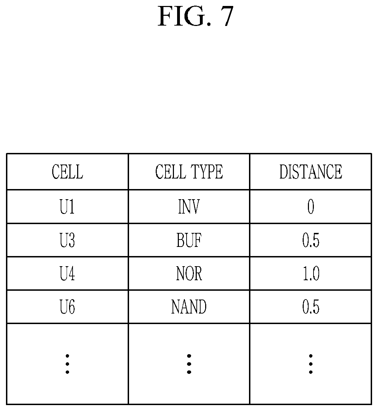

FIG. 7 illustrates a table of examples of cell types and distances from through-vias of cells placed in a soft keep-out zone to through-vias.

As shown in the table of FIG. 7, the cell type of each of the cells placed in the soft keep-out zone and the distance from the through-via may be extracted.

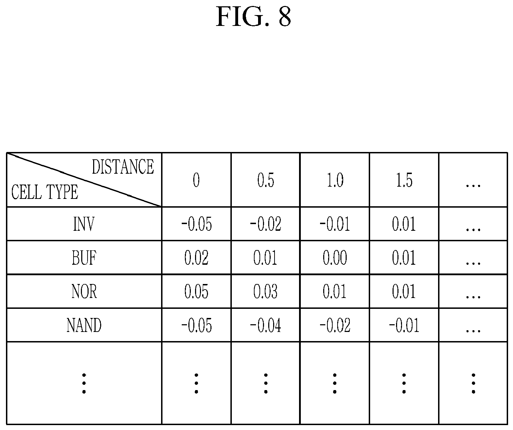

Next, the analyzer determines a timing margin for the cells (S212). In step S212, a timing margin may be set for each of the cells placed in the soft keep-out zone, or a cell library of each of the cells placed in the soft keep-out zone may be modified. The setting of the timing margin will be described with reference to FIGS. 8-10.

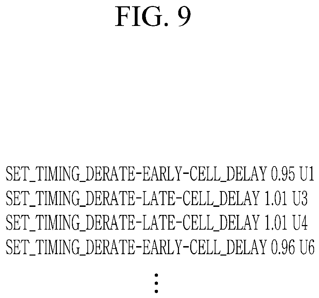

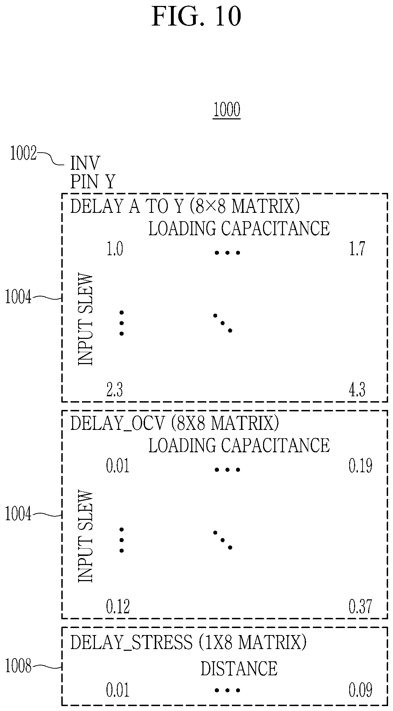

FIG. 8 illustrates an example of a table of a timing margin according to a cell type and a distance from a through-via, FIG. 9 illustrates an example of a code for applying a timing margin according to a design method of an integrated circuit, and FIG. 10 illustrates an example 1000 of a cell library structure for applying a timing margin according to a design method of an integrated circuit.

As shown in FIG. 8, a timing margin based on a distance from a through-via may be measured or calculated for each cell type. In the case of same cell type, an absolute value of the timing margin may be smaller as the distance from the through-via increases. In some implementations, SPICE simulation may be performed by reflecting the stress according to the distance from the through-via, and a difference in delay between a cell disposed around the through-via and a cell spaced apart from the through-via may be represented by a table as shown in FIG. 8.

Referring to FIG. 9, a timing margin corresponding to the cell type of each cell and the distance from the through-via may be applied to the cell. For example, since a cell U1 of FIG. 7 has an inverter cell type (INV) and a distance from the through-via of '0' level, the timing margin is confirmed to be -0.05 in FIG. 8, and as shown in FIG. 9, a timing margin may be applied for the cell U1 by adding the timing margin to one. For example, the timing margin could be applied: "SET_TIMING DERATE-EARLY-CELL DELAY 0.95 U1". For example, since a cell U3 of FIG. 7 has a buffer cell type (BUF) and the distance from the through-via of '0.5' level, the timing margin is confirmed to be 0.01 in FIG. 8, and as shown in FIG. 9, a timing margin may be applied for the cell U3 by adding the timing margin to one. For example, the timing margin could be applied: " SET_TIMING_DERATE-LATE-CELL_DELAY 1.01 U3". For example, since a cell U4 of FIG. 7 has a NOR cell type and the distance from the through-via of'1.0' level, the timing margin is confirmed to be 0.01 in FIG. 8, and as shown in FIG. 9, a timing margin may be applied for the cell U4 by adding the timing margin to one. For example, the timing margin could be applied: "SET_TIMING_DERATE-LATE-CELL_DELAY 1.01 U4". For example, since a cell U6 of FIG. 7 has a NAND cell type and the distance from the through-via of '0.5' level, the timing margin is confirmed to be -0.04 in FIG. 8, and as shown in FIG. 9, a timing margin may be applied for the cell U6 by adding the timing margin to one. For example, the timing margin could be applied: "SET_TIMING_DERATE-EARLY-CELL_DELAY 0.96 U6". In other words, the stress caused by the through-via may be reflected in the cell by a command of an EDA program.

Referring to FIG. 10, a cell library of the cell may store a cell type 1002 of the cell, a timing margin (e.g., DELAY A TO Y) 1004 according to the cell type, a timing margin (e.g., DELAY_OCV) 1006 according to on-chip variation (OCV), and a plurality of timing margins (e.g., DELAY_STRESS) 1008 corresponding to distances from a plurality of through-vias. For example, in FIG. 10, INV may refer to the inverter as the cell type, and A may refer to an input terminal of the inverter, and PIN Y and Y may refer to an output terminal of the inverter. For example, DELAY A TO Y may refer to a delay (e.g., a timing margin) from the input terminal to the output terminal of the inverter. A plurality of timing margins calculated according to the standard cell type of the cell placed within the keep-out zone and the distance from the through-via may be stored in a cell library for the standard cell type of the cell placed within the keep-out zone. Therefore, based on the cell library corresponding to each cell type, among the plurality of timing margins 1008, a timing margin corresponding to a distance from the corresponding cell to the through-via may be applied to the corresponding cell. For example, based on the standard cell library, the standard cell type of the corresponding cell and the timing margin corresponding to the distance from the corresponding cell to the through-via may be applied to the corresponding cell.

The analyzer performs clock tree synthesis (CTS) on a clock signal provided to the cells (S214). Performing of the CTS (S214) may include generating patterns of signal lines of a central clock related to a response time that determines performance of a semiconductor device.

A Router performs routing for a general signal provided to cells (S216). The routing may include determining how to route wires that connect gates within a functional block. In other words, the routing may include generating a disposition pattern of general signal lines. The general signal lines may include signal lines that transmit general control signals, input signals, or output signals other than clock signal lines. For example, the routing may be performed based on the timing margin

Next, the analyzer performs timing engineering change order (ECO) (S218). For example, a timing ECO operation may include a static timing analysis (STA) operation and an operation of updating timing. For example, the timing ECO operation may include a timing optimization operation. In step S218, whether or not a timing condition is satisfied may be detected by considering cells in which a timing margin is set by a code of FIG. 9 and/or a cell library of FIG. 10.

The timing ECO operation is performed, and the processor outputs layout data (S220).

In some implementations, the overhead of the area may be reduced by disposing cells in the soft keep-out zone. In some implementations, timing analysis of an integrated circuit may be performed by setting timing margins to cells. In some implementations, since the cells placed in the soft keep-out zone are extracted and the timing margin is applied, code and/or cell library generation for applying the timing margin may be more simplified.

FIGS. 11 and 12 illustrate examples of block diagrams of a design system of an integrated circuit.

Referring to FIG. 11, a design system 1100 includes a processor 1110, a storage device 1120, a design module 1130, and an analysis module (or referred to as an analyzer) 1140.

The term "module" used below may refer to software, hardware such as an Field Programmable Gate Array (FPGA) or Application Specific Integrated Circuit (ASIC), or a combination of software and hardware. A "module" may be stored in an addressable storage medium in the form of software and may be configured to be executed by one or more processors. For example, the "module" may include components such as software components, object-oriented software components, class components, and task components, processes, functions, properties, procedures, subroutines, segments of program code, drivers, firmware, microcode, circuits, data, databases, data structures, tables, arrays, and variables. A "module" may be separated into a plurality of "modules" that perform detailed functions.

The processor 1110 may be used by the design module 1130 and/or the analysis module 1140 to perform calculations. For example, the processor 1110 may include a microprocessor, an application processor (AP), a digital signal processor (DSP), a graphic processing unit (GPU), and the like. FIG. 10 illustrates only one processor 1110, but the present disclosure is not limited thereto, and the design system 1100 may include a plurality of processors. Meanwhile, although not shown in detail, the processor 1110 may include a cache memory to improve computing performance.

The storage device 1120 may further include a standard cell library 1122 and a design rule 1124. The standard cell library 1122 and the design rule 1124 may be provided from the storage device 1120 to the design module 1130 and/or the analysis module 1140.

The standard cell library 1122 may include information about standard cells, for example, function information, characteristic information, layout information, timing margin information, and the like. For example, the standard cell library 1122 may store standard cell types, timing margins according to standard cell types, timing margins according to on-chip variations, and a plurality of timing margins corresponding to distances from a plurality of through-vias. A user may add a plurality of timing margins corresponding to distances from a plurality of through-vias to the standard cell library 1122 corresponding to a cell type of a cell placed in the soft keep-out zone.

The storage device 1120 is a computer-readable storage medium and may include any storage medium that stores data and/or instruction words executed by a computer. For example, the computer-readable storage medium may include a volatile memory such as a Random Access Memory (RAM) and a Read-Only Memory (ROM), and a non-volatile memory such as a flash memory, a Magnetic Random Access Memory (MRAM), a Phase-change Random Access Memory (PRAM), and a Resistive Random Access Memory (RRAM). The computer-readable storage medium may be installed into a computer, integrated into a computer, or combined with a computer through a communication medium such as a network and/or a wireless link.

The design module 1130 may include a placer 1132 and a router 1134.

The placer 1132 may place standard cells based on input data DI defining an integrated circuit and the standard cell library 1122 by using the processor 1110. The router 1134 may perform signal routing for the cell disposition provided from the placer 1132.

The analysis module 1140 may analyze and verify disposition and routing results. As a result of the analysis, when the routing is not successfully completed, the placer 1132 may modify and provide the existing disposition, and the router 1134 may perform signal routing again for the modified disposition. When the routing is successfully completed as a result of the analysis, the router 1134 may generate output data DO defining an integrated circuit.

In some implementations, the placer 1132 and the router 1134 may be implemented as a single integrated design module 1130, or the placer 1132 and the router 1134 may be implemented as separate modules.

The design module 1130 and/or the analysis module 1140 may be implemented in the form of software, but the present disclosure is not necessarily limited thereto. When both the design module 1130 and the analysis module 1140 are implemented in the form of software, the design module 1130 and the analysis module 1140 may be stored in the storage device 1120 in the form of codes or may be stored in another storage device (not shown) separate from the storage device 1120 in the form of codes.

Referring to FIG. 12, a design system 1200 may include a processor 1210, an input/output (I/O) device 1220, a network interface 1230, a random access memory (RAM) 1240, a read only memory (ROM) 1250, and a storage device 1260.

The design system 1200 may be a computing system and may be a fixed computing system such as a desktop computer, a workstation, or a server, or a portable computing system such as a laptop computer.

The processor 1210 may include a core capable of executing any instruction set (for example, Intel Architecture-32 (IA-32), 64-bit extended IA-32, x86-64, PowerPC, Scalable Processor Architecture (Sparc), Million Instructions Per Second (MIPS), ARM, IA-64, and the like). For example, the processor 1210 may access a memory, e.g., the RAM 1240 or the ROM 1250 through a bus, and may execute instructions stored in the RAM 1240 or the ROM 1250. The storage device 1260 may store all or some of a program 1262 corresponding to the design module 1130 and the analysis module 1140 of FIG. 11, and the program 1262 may cause the processor 1210 to perform an operation for designing an integrated circuit.

The RAM 1240 may store all or some of a program 1262, and the program 1262 may cause the processor 1210 to perform an operation for designing an integrated circuit. In other words, the program 1262 may include a plurality of instructions and/or procedures executable by the processor 1210, and the plurality of instructions and/or procedures included in the program 1262 may cause the processor 1210 to perform an operation for designing an integrated circuit according to embodiments of the present disclosure. The procedure may represent a series of instructions for performing a specific task. The procedure may also be referred to as functions, routines, subroutines, subprograms, or the like. Each of the procedures may process data provided from the outside or data generated by another procedure.

The storage device 1260 may store the program 1262, a cell library 1264, and a design rule (DR) 1266, and all or some of the program 1262 may be loaded into the RAM 1240 from the storage device 1260 before the program 1262 is executed by the processor 1210. The storage device 1260 may store a file written in a program language, or all or some of the program 1262 generated by a compiler may be loaded into the RAM 1240.

The storage device 1260 may store data to be processed by the processor 1210 or data processed by the processor 1210. For example, the processor 1210 may generate new data by processing data stored in the storage device 1260 according to the program 1262 and store the generated data in the storage device 1260.

The input/output device 1220 may include an input device such as a keyboard and a pointing device and may include an output device such as a display device and a printer. For example, a user may trigger execution of the program 1262 by the processor 1210 through the input/output device 1220 or may input the input data DI of FIG. 11 and may check the output data DO of FIG. 11 and/or an error message.

The network interface 1230 may provide access to a network outside the design system 1200. For example, the network may include a plurality of computing systems and communication links, and the communication links may include wired links, optical links, wireless links, or any other type of links. The input data DI of FIG. 11 may be provided to the design system 1200 through the network interface 1230, and the output data DO of FIG. 11 may be provided to another computing system through the network interface 1230.

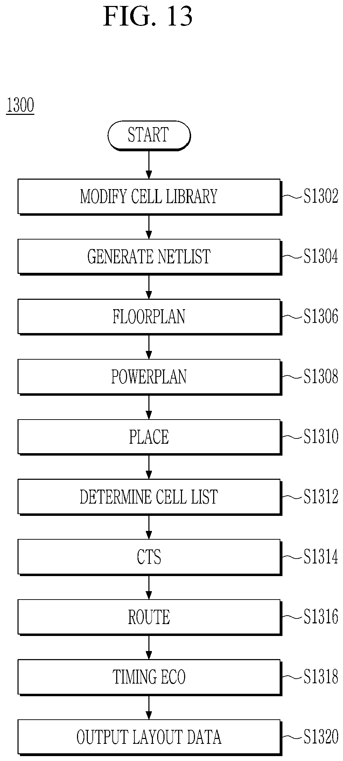

FIG. 13 illustrates a flowchart of an example of a design method of an integrated circuit.

Referring to FIG. 13, a design method 1300 of the integrated circuit in some implementations may be a method of designing a layout of the integrated circuit and may be performed in a tool for designing the integrated circuit. Compared to the design method of FIG. 2, descriptions of the same or similar steps (S1304 to S1320) are omitted.

Referring to FIG. 13, a cell library is changed (S1302). As described with reference to FIG. 10, in step S1302, the cell library of the cells may store the timing margin 1008 corresponding to the distance from the through-via. In this example, a timing margin based on a distance from a through-via may be stored in a cell library of cells included in an integrated circuit before placement step S1310.

Thereafter, steps S1304 to S 1320 may be performed so that layout data may be outputted. In some implementations, the timing margin based on the distance from the through-via may be set to the cell determined in step S1312 by referring to the cell library.

In some implementations, the overhead of the area may be reduced by disposing the cells in the soft keep-out zone. In some implementations, the timing analysis of the integrated circuit may be performed by setting the timing margins to the cells.

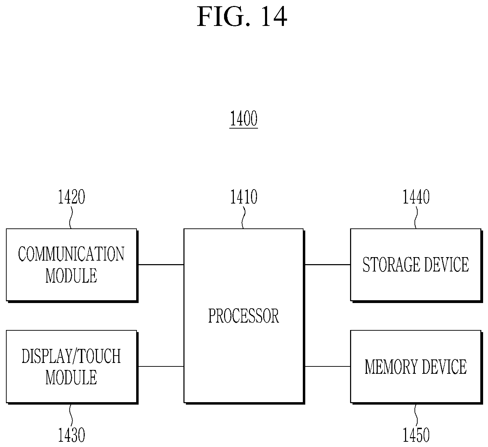

FIG. 14 illustrates an example of a block diagram of an electronic system.

Referring to FIG. 14, an electronic system 1400 includes a processor 1410, a communication module 1420, a display/touch module 1430, a storage device 1440, and a memory device 1450. For example, the electronic system 1400 may be a mobile system or a computing system.

As described above, the configurations of the electronic system 1400 determine the area in which the through-via is disposed and determine the soft keep-out zone based on the saturated current according to the distance from the through-via, thereby reducing the area overhead.

The processor 1410 may control an overall operation of the electronic system 1400. The processor 1410 may execute an operating system, an application, and the like. The communication module 1420 may be implemented to control wired communication and/or wireless communication with the outside. The display/touch module 1430 may be implemented to display data processed by the processor 1410 or to receive data from a touch panel. The storage device 1440 may store user data. The memory device 1450 may temporarily store data necessary for a processing operation of the electronic system 1400.

Implementations of the present disclosure may be usefully used in the design of any electronic device or system. For example, implementations include electronic devices such as a computer, a laptop, a cellular phone, a smart phone, an MP3 player, a personal digital assistant (PDA), a portable multimedia player (PMP), a digital TV, a digital camera, a portable game console, a navigation device, a wearable device, an IoT (Internet of Things) device, an IoE (Internet of Everything) device, an e-book, a virtual reality (VR) device, and an augmented reality (AR) device.

While this disclosure contains many specific implementation details, these should not be construed as limitations on the scope of what may be claimed. Certain features that are described in this disclosure in the context of separate implementations can also be combined in a single implementation. Conversely, various features that are described in the context of a single implementation can also be employed in multiple implementations separately or in any suitable subcombination. Moreover, although features may be described above as acting in certain combinations and even initially be claimed as such, one or more features from a combination can in some cases be excised from the combination, and the combination may be directed to a subcombination or variation of a subcombination.

While the embodiment of the present disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

## Claims

1. A method comprising:
placing a through-via in a semiconductor chip (110);
determining a keep-out zone (114) around the through-via (112; 320) based on a saturated current variation rate according to a distance from the through-via (112; 320);
placing a plurality of standard cells in the semiconductor chip (110);
determining that a first cell of the plurality of standard cells is placed within the keep-out zone (114); and
setting a timing margin based on the distance from the through-via (112; 320) to the first cell.

2. The method of claim 1, wherein determining the keep-out zone (114) includes determining a first keep-out zone (HARD KoZ) and a second keep-out zone (SOFT KoZ; 620) in the keep-out zone based on a first distance (R; R1-R3) from the through-via (112; 320) when the saturated current variation rate is a first reference value, a second distance (S; S1-S3) from the through-via (112; 320) when a slope between the distance from the through-via (112; 320) and the saturated current variation rate is a threshold value, and a third distance (H; H1-H3) from the through-via (112; 320) when the saturated current variation rate is a second reference value smaller than the first reference value.

3. The method of claim 2, wherein determining of the first keep-out zone (HARD KoZ) and the second keep-out zone (SOFT KoZ; 620) includes:
when the first distance is greater than the second distance and the second distance is greater than the third distance,
determining an area between the first distance (R; R1-R3) and the second distance (S; S1-S3) from the through-via (112; 320) as the second keep-out zone (SOFT KoZ; 620); and
determining an area within the second distance (S; S1-S3) from the through-via (112; 320) as the first keep-out zone (HARD KoZ) when the first distance (R; R1-R3) is greater than the second distance (S; S1-S3) and the second distance (S; S1-S3) is greater than the third distance (H; H1-H3).

4. The method of claim 2, wherein determining the first keep-out zone (HARD KoZ) and the second keep-out zone (SOFT KoZ; 620) includes:
when the first distance is greater than the second distance and the second distance is less than or equal to the third distance,
determining an area between the first distance (R; R1-R3) and the third distance (H; H1-H3) from the through-via (112; 320) as the second keep-out zone (SOFT KoZ; 620); and
determining an area within the third distance (H; H1-H3) from the through-via (112; 320) as the first keep-out zone (HARD KoZ) when the first distance (R; R1-R3) is greater than the second distance (S; S1-S3) and the second distance (S; S1-S3) is less than or equal to the third distance (H; H1-H3).

5. The method of claim 2, wherein determining the first keep-out zone (HARD KoZ) and the second keep-out zone (SOFT KoZ; 620) includes:
when the second distance is greater than the first distance and the first distance is greater than the third distance,
determining an area between the first distance (R; R1-R3) and the third distance (H; H1-H3) from the through-via (112; 320) as the second keep-out zone (SOFT KoZ; 620); and
determining an area within the third distance (H; H1-H3) from the through-via (112; 320) as the first keep-out zone (HARD KoZ) when the second distance (S; S1-S3) is greater than the first distance (R; R1-R3) and the first distance (R; R1-R3) is greater than the third distance (H; H1-H3).

6. The method of claim 2, wherein determining the first keep-out zone (HARD KoZ) and the second keep-out zone (SOFT KoZ; 620) includes changing the second distance (S; S1-S3) by changing the threshold value.

7. The method of any one of claims 2 to 6, wherein placing the plurality of standard cells includes placing at least one cell of the plurality of standard cells in the second keep-out zone without placing the plurality of standard cells in the first keep-out zone (HARD KoZ).

8. The method of claim 1, wherein determining that the first cell of the plurality of standard cells is placed within the keep-out zone (114) includes determining a standard cell type of the first cell and a first distance (R; R1-R3) of the first cell from the through-via (112; 320).

9. The method of claim 8, wherein setting the timing margin to the first cell includes:
applying, among a plurality of timing margins calculated according to the distance from the through-via (112; 320) for each cell type of a plurality of standard cell types, a timing margin corresponding to the standard cell type of the cell and the distance of the first cell to the through-via (112; 320).

10. The method of claim 9, wherein:
a first timing margin of the plurality of timing margins is greater than a second timing margin of the plurality of timing margins,
wherein the first timing margin, among the plurality of timing margins, is applied when the distance of the first cell to the through-via (112; 320) is the first distance (R; R1-R3), and
wherein the second timing margin, among a plurality of timing margins, is applied when the distance of the first cell to the through-via (112; 320) is a second distance (S; S1-S3) greater than the first distance (R; R1-R3).

11. The method of claim 1, wherein setting the timing margin to the first cell includes:
storing a plurality of timing margins calculated according to the standard cell type of the first cell placed within the keep-out zone and the distance from the through-via (112; 320) in a standard cell library for the standard cell type of the first cell placed within the keep-out zone; and
applying a timing margin corresponding to the standard cell type of the first cell and the distance from the through-via (112; 320) of the cell to the first cell based on the standard cell library.

12. The method of claim 1, wherein placing the plurality of standard cells includes placing, among the plurality of standard cells, a second cell of a standard cell lower than a predetermined stress based on the distance from the through-via (112; 320) within the keep-out zone.

13. The method of claim 1, wherein placing the plurality of standard cells includes placing a second cell that does not belong to a data path that is critical to timing characteristics among a plurality of data paths between the standard cells within the keep-out zone.

14. The method of claim 1, comprising:
performing clock tree synthesis on a clock signal provided to the plurality of standard cells;
performing routing on a general signal provided to the plurality of standard cells; and
performing a timing engineering change order, ECO.

15. A computing system for manufacturing an integrated circuit including a plurality of standard cells, the computing system comprising:
one or more processors; and
a memory storing information including executable code that, when executed by the one or more processors, causes the one or more processors to perform the method according to any one of claims 1 to 14 and to generate layout data of an integrated circuit by routing the plurality of standard cells.
